Europäisches Patentamt

European Patent Office

Office européen des brevets

(11) Publication number: **0 006 676**
A2

# EUROPEAN PATENT APPLICATION

(21) Application number: **79200361.8**

(22) Date of filing: **03.07.79**

(51) Int. Cl.³: **B 60 B 25/22, B 60 B 25/18**

(30) Priority: **05.07.78 US 921971**

(43) Date of publication of application: **09.01.80**
**Bulletin 80/1**

(84) Designated Contracting States: **AT BE CH DE FR GB IT LU NL SE**

(71) Applicant: **De Graaff, Adrianus Joseph, Staringstraat 35, NL-5343-GA Oss (NL)**

(72) Inventor: **De Graaff, Adrianus Joseph, Staringstraat 35, NL-5343-GA Oss (NL)**

(74) Representative: **Noz, Franciscus Xaverius, Ir. et al, Boschdijk 155, NL-5612 HB Eindhoven (NL)**

(54) Split-wheel assembly.

(57) A split-wheel assembly comprising a central-supporting wheel body arranged to be mounted to conventional vehicle-hub members, wherein the body includes oppositely disposed annular recesses to receive inner and outer rim members therein, the rim members being removably mounted to the wheel body by a plurality of socket-head bolts wherein sealing rings are positioned and interposed between each rim member and each annular recess of the central wheel body, whereby the rims may be provided with a combination of various width dimensions to correspond to the different sizes and types of tires. Due to the use of a given pair of wheel rims for a particular size tire, a selected tire can be centrally positioned within a given tire well of a vehicle.

SPLIT-WHEEL ASSEMBLY.

This invention relates to wheels that support tires on vehicles and, more particularly, to a split-rim-wheel assembly that allows interchanging of different sizes of wheel rims to accomodate any given size and width of tire.

As is well known in the art, various problems and difficulties are encountered in providing suitable split-rim wheels for tires, particularly where a different tire size is often substituted.

Several types of tire wheel structures are used to accomodate the various tires. However, up to the present time, these wheel structures have had inherent problems, one of these being that wheel structures are designed to accomodate a very limited tire-size range.

Secondly, when one wants to change a vehicle tire to a larger width, he encounters the problem of being unable to centrally position the tire within the tire well of the vehicle. Many times, for instance, a large tire will protrude outwardly from the outer edge of a fender well.

Thus, a specially designed wheel must be provided, and/or be specially arranged with additional elements; or the fender must be physically altered to prevent damage to the extended portion of the oversized tire. It is important to note that -- as the oversized tire protrudes outwardly -- there is created unused space between the inner side of the tire and the inner portion of the fender well.

Hence, it is most desirable to provide a wheel that will accomodate any size tire, and that will allow the tire to be centrally positioned at all times within the fender well -- at the same time requiring no special tools, additional elements, or alteration of the fender well.

20806/FN/ts

Accordingly, the presently disclosed wheel assembly provides positive solutions to the known and well established problems found in both passenger automobiles and racing vehicles.

The following patents are examples of several known wheel structures:

United States Patent No. 3,357,747, wherein the wheel construction comprises bands of filaments integrated by a binder and laminated to form a toroidal body which is severed, providing first and second sections that are joined in back-to-back relation.

United States Patent No. 3,880,219, comprising a wheel rim having two rim portions secured together by fastening members engaging radially, inwardly extending attachment flanges, a channel being formed between the attachment flanges to receive a sealing ring of smaller width, measured in the radial direction of the rim, than that of the channel measured in the radial direction.

Another wheel construction is disclosed in United States Patent No. 2,868,260. This invention provides a positive bead lock for one of the beads of the tire mounted on a rim of the invention.

United States Patent No. 3,998,258 discloses an expandable tire-rim arrangement and a method of installation.

United States Patent No. 4,013,499 provides an apparatus for supporting a tire while a strip of premolded tread is being applied thereto, in order to reconstruct the tread of the tire.

The present invention provides a three-piece split-wheel assembly wherein a central-supporting wheel body is arranged having a plurality of conventional stud-mounting holes, including an enlarged central aperture to receive the hub of a vehicle therethrough in a conventional manner. The wheel body includes oppositely disposed annular recesses located on the opposite, outer, radial surface thereof -- and has also formed therin annular grooves to receive "O"-ring-sealing members.

The recesses are adapted to receive a pair of rim members, one being defined as an outer rim and the other as an inner rim. These rims are removably secured to the central body by means of suitable bolts, so as to allow simple changes of various sized rims to correspond to the particular tires to be mounted thereon.

20806/FN/ts

0006676

Accordingly, a given size and width of tire can be accomodated to be mounted thereon in such a manner that the tire can be centrally positioned within a fender well of a vehicle -- thereby preventing damage to the tire and vehicle, or preventing the altering of the vehicle's fender structure to accomodate an oversized tire.

The present invention has for an impottant object a provision wherein any given size pair of inner and outer rim members can be assembled to accomodate a given tire, the tire being centrally positioned within the fender well of a given vehicle.

It is another object of the invention to provide a split-wheel assembly wherein only the individual part has to be replaced when damaged in an accident.

It is still another object of the invention to provide a split-wheel assembly of this type that can be employed with both tube and tubeless tires.

It is further an object of the invention to provide a split-wheel assembly having three basic members which are intersealed together-- thus allowing the wheel to be easily serviced and maintained.

Still another object of the invention is to provide a device of this character that is relatively inexpensive to manufacture, and that is simple and rugged in construction.

The characteristics and advantages of the invention are further sufficiently referred to in connection with the accompanying drawings, which represent one embodiment. After considering this example, skilled persons will understand that variations may be made without departing from the principles disclosed; and I contemplate the employment of any structures, arrangements or modes of operation that are properly within the scope of the appended claims.

Referring more particularly to the accompanying drawings, which are for illustrative purposes only:

Figure 1 is a perspective view of the complete assembly of the present invention;

Figure 2 is an enlarged, cross-sectional view taken substantially along line 2-2 of Figure 1;

Figure 3 is an exploded perspective view of a portion of the central support body showing the associated "O"-rings;

Figure 4 is an exploded perspective view of a suitable bolt means; and

Figure 5 is a schematic view of a tire positioned in a fender well of a vehicle with phantom lines indicating an enlarged size tire centrally positioned therein.

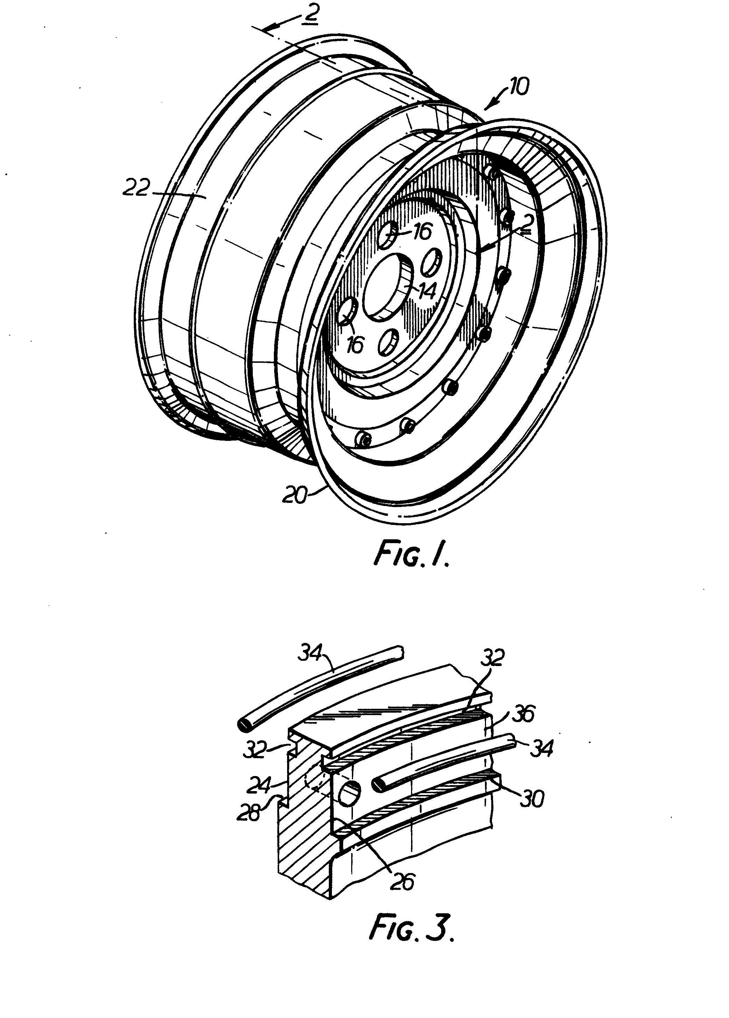

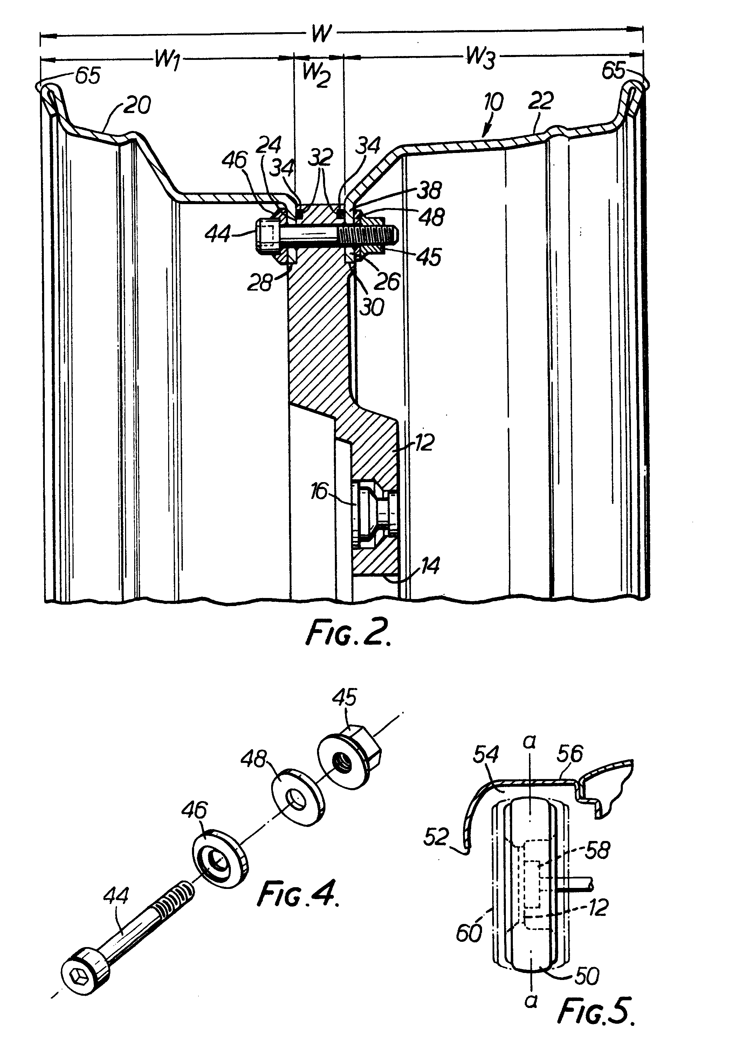

Referring more particularly to Figures 1 and 2, there is shown a split-wheel assembly, generally designated at 10, wherein the assembly comprises a central supporting body 12 having a cylindrical configuration which includes a central enlarged aperture 14, through which is received a typical hub support associated with a conventionally wheeled vehicle.

Juxtaposed about the central aperture 14 is a plurality of stud-receiving holes 16 which are disposed in suitable arrangement to accomodate any of the known wheel-mounting studs, generally found on a typical brake drum of a vehicle, the drum being conventional in structure, as seen in Figure 5.

Central body 12, when mounted to the conventional hub and brake drum of a vehicle, will generally be located so that ( when a tire is mounted thereon) it will be positioned within the fender well of the vehicle in such a manner that the tire is free and clear from the surrounding area. That is, at no time does the tire come in contact with any portion of the vehicle. Thus, it will be seen that body 12 does not have to be changed or rearranged when it becomes necessary to mount a different size tire in a given fender well.

This is further accomplished by providing a pair of rim members which include an outer rim member 20 and an inner rim member 22. Each rim member is adapted to be removably mounted to central support body 12 wherein said body 12 includes a pair of oppositely disposed annular recesses 24 and 26. The recesses are formed on opposite surfaces of body 12 continuously around the outer annular edges thereof, wherein each respective recess is defined by an annular shoulder 28 and 30. Further provided in each recess is an annular groove 32 positioned adjacent the outer edge of body 12, and in the faces 34 and 36 of respective recesses 24 and 26. Grooves 32 are provided to receive "O"-ring seal members 4, thus defining a sealing means arranged between body 12 and each rim member 20 and 22.

20806/FN/ts

As shown in Figure 2, rim 20 is provided with a different configuration than rim 22; and thus it should be noted that various sizes of rim 20 can be arranged with various sizes of rim 22 to accommodate any size or width tire to be mounted thereon.

However, rim 20 must include an inner annular flange member 36; and rim 22 must also be provided with a similar annular flange member 38.

The respective flanges 36 and 38 are arranged to fit within annular recesses 24 and 26, and about against respective shoulders 28 and 30. Each flange member 36 and 38 is further provided with a plurality of juxtaposed holes 40 to be axially aligned with associated holes 42 disposed in body 12 and located within the recesses 24 and 26. Once the holes are aligned, fastening means, such as socket-head bolt 44 and nut 45 seen in Figures 2 and 4, are positioned through said holes.

Further sealing means are established by sealing washers 46 and 48 which are provided between the head of bolt 44 and the nut 48. These bolts and nuts allow for simple change of the rims 20 and 22.

In order to additionally clarify the important aspect of the present invention, Figure 5 illustrates the arrangement of a reduced-width tire 50, which is also indicated in Figure 2 as W. With any given size opening 52 and well 54 of fender 56, tire 50 will be centrally positioned within well 54 as shown, wherein body 12 is mounted to drum 58. Thus, the width of tire 50 establishes the width W between corresponding oppositely disposed rims 20 and 22, as seen in Figure 2, wherein the width or rim 20 -- that is, $W_1$ together with $W_2$ (the width of body 12) and $W_3$( the width of rim 22) -- equals the overall width of tire 50, However, when a larger or smaller width tire is to be substituted therefor, the rims 20 and 22 must be correspondingly changed. Thus, if the tire is enlarged as indicated at 60 in Figure 5, then $W_1$ and $W_2$ of respective rims 20 and 22 can be sized so as to allow tire 60 to also be positioned centrally within the fender well 54.

Generally, when a tire has a greater width than the original tire of the vehicle, the enlarged tire -- when mounted thereon -- wil be offset from the central line a-a, and thus will engage the fender with the possibility of damage to both the tire and the vehicle. Hence, this problem is eliminated by the combining of the proper corresponding rim sizes with the corresponding tire size and width.

Accordingly , the total rim width is obtained by adding $W_1$, $W_2$ and $W_3$, wherein a given sized tire will have a given sized set of inner and outer rims, so as to position the given tire centrally within the fender well.

In order to provide additional strength to rims 20 and 22, they are each formed having an outer, radial, reverse lip member 65.

The invention and its attendant advantages will be understood from the foregoing description; and it will be apparent that various changes may be made in the form, construction  and arrangement of the parts of the invention without departing from the spirit and scope thereof or sacrificing its material advantages, the arrangement hereinbefore described being merely by way of example; and I do not wish to be restricted to the specific from shown or uses mentioned, except as defined in the accompanying claims.

-CLAIMS-

CLAIMS

1.     Split-wheel assembly having interchangeably sized wheel rims to accommodate various sizes and widths of tires, wherein the tire is always centrally positioned within a given fender well of a given vehicle, said assembly  characterized in having;

a central-supporting wheel-body member;

an outer rim member removalby secured to said wheel-body member;

an inner rim member removably secured to said Wheel-body member opposite said outer rim member, wherein a given width dimension of said tire to be mounted thereon determines the width relationship between said inner and outer rim members;

means for removably securing said rim members to said wheel-body member; and

means for sealing said rim members to said wheel-body member.

2.     A split-wheel assembly as recited in claim 1, wherein said central-supporting wheel-body member includes:

a pair of oppositely disposed annular recesses formed on opposite sides of said body along the outer edges thereof;

said recesses being defined by radial shoulder members; and

a plurality of juxtaposed holes disposed within said recesses to receive  said securing means.

3.     A split-wheel assembly as recited in claim 2, wherein each of said rim members includes:

a depending, inner, annular flange member arranged to be received in respective recesses and to abut against said radial shoulder of each recess; and

a plurality of juxtaposed holes formed in said flanges to receive said securing means therethrough when aligned with said holes disposed in said recesses.

4.      A split-wheel assembly as recited in claim 3, wherein said sealing means comprises:

a pair of annular grooves, each groove thereof being formed in said annular recesses so  as to be oppositely disposed to each other; and

a pair of "0"-ring sealing members received in said grooves for sealing engagement with said flanges of said rim members.

5.      A split-wheel assembly as recited in claim 4, wherein each of said rim members includes a radial, reverse lip member formed thereon.

1/2

0006676

FIG. 1.

FIG. 3.

2/2

0006676

FIG.2.

FIG.4.

FIG.5.